# EUROPEAN PATENT SPECIFICATION

(11) **EP 4 070 666 B1**
(45) Date of publication and mention of the grant of the patent: **17.12.2025**
(21) Application number: 22165015.3
(22) Date of filing: 29.03.2022
(51) Int. Cl.: A23K 10/12, A23K 10/14, A23K 10/30, A23K 10/37, A23K 10/38, A23K 20/189, A23K 50/80

(54) **ENZYME-RICH EXTRACT AND USE THEREOF IN PRE-TREATMENT OF PLANT FEEDSTUFF-BASED DIETS**
ENZYMREICHER EXTRAKT UND SEINE VERWENDUNG ZUR VORBEHANDLUNG VON FUTTERMITTELN AUF PFLANZENBASIS
EXTRAIT RICHE EN ENZYME ET SON UTILISATION DANS LE PRÉTRAITEMENT DE RÉGIMES ALIMENTAIRES À BASE D'ALIMENTS VÉGÉTAUX

(30) Priority: 08.04.2021 PT 2021117165
(43) Date of publication of application: 12.10.2022
(73) Proprietor: CIIMAR - Centro Interdisciplinar de Investigação Marinha e Ambiental, 4450-208 Matosinhos (PT); Universidade do Minho, 4704-553 Braga (PT); Universidade Do Porto, 4099-002 Porto (PT); Universidad de Almeria, 04120 La Cañada de San Urbano (Almeria) (ES)
(72) Inventor: PERES, Helena, 4450-208 MATOSINHOS (PT); BELO, Isabel, 4710-057 BRAGA (PT); SALGADO SEARA, José Manuel, 4710-057 BRAGA (PT); CASTRO, Carolina, 4450-208 MATOSINHOS (PT); OLIVA TELES, Aires, 4169-007 PORTO (PT); FERNANDES, Helena, 4450-208 MATOSINHOS (PT); J. MOYANO, Francisco, 04120 ALMERÍA (ES)
(74) Representative: Couto, Cláudia

(56) References cited:
- EP-B1- 3 010 352
- FERNANDES HELENA ET AL: "In vitro evaluation of the interaction between exogenous carbohydrases produced by solid-state fermentation of brewers spent grain and digestive enzymes", EUROPEAN AQUACULTURE SOCIETY (EAS), 1 October 2019 (2019-10-01), pages 1046 - 1047, XP055913199
- FERNANDES HELENA ET AL: "Sequential bioprocessing of Ulva rigida to produce lignocellulolytic enzymes and to improve its nutritional value as aquaculture feed", BIORESOURCE TECHNOLOGY, vol. 281, 1 June 2019 (2019-06-01), AMSTERDAM, NL, pages 277 - 285, XP055913202, ISSN: 0960-8524, DOI: 10.1016/j.biortech.2019.02.068

## Description

### Technical field

This application relates to a pre-treatment process of plant feedstuff-based to increase nutrient bioavailability of such diets.

### Background art

By 2050, the world is expected to approach 10 billion people (FAO, 2020). This will increase the demand for food and non-food items, and it is also projected to drastically increase the waste generation from today's 2.01 billion tons to 3.40 billion tons of waste annually by 2050 (Kaza *et al.,* 2018; European Commission, 2020).

The brewing industry has significant importance on the European Union (EU) economy (Ortiz et al., 2019). In 2018, over 405 million hectolitres of beer were produced in Europe, which places the EU as the second most important beer producer in the world (The Brewers of Europe, 2020). The brewing processes imply a large production of solid wastes, with brewer's spent grain (BSG) accounting for about 80-85% (20 kg per 100 L of beer produced) of the total of brewing industry by-products (Mussato et al., 2006; Mussato, 2014). The significant volume of BSG all year round, along with the increasing interest in the recycling and re-use of industrial wastes and by-products in the context of a circular economy, have stimulated interest in developing new valorization pathways as an alternative solution to the traditional linear economy approach that relies on non-ecological and economic practices, such as waste disposal in landfills (Farcas et *al.,* 2017; Ortiz et al., 2019; European Commission, 2019).

BSG is lignocellulosic biomass mainly composed of fiber (30-50% w/w; lignin, cellulose, and hemicellulose) and protein (19-30% w/w). Given its nutritional content, BSG has been primarily used as a low-value animal feed, mainly for ruminants (Lynch et al., 2016). Due to the lignocellulosic structure and free sugars availability, BSG is an attractive substrate for biotechnological processes, as Solid-state fermentation (SSF) (Mussatto, 2014).

SSF is a low-cost and eco-innovative biotechnological process that has been gaining an increased interest due to the possibility of transforming low-value by-products into value-added extracts with bioactive compounds enzymes and other components such as antioxidant compounds (Ghosh and Ray, 2017). Through this biotechnological process, specific microorganisms (i.e. fungus/yeast; bacteria), in the absence or near absence of free water, use the agro-industrial by-products as solid support and as a source of nutrients necessary for its growth by producing a combination of natural enzymes (Graminha et al., 2008; Moura et al., 2012; Thomas et al., 2013). A wide range of microbial enzymes can be produced and used in different industrial applications, such as textile and pharmaceutical uses, bioremediation and biological control, and food and feed industries (Fleuri et al., 2013). In the animal feed industry, enzymes may be used as feed additives to overcome many different practical problems in feed use, such as degradation of indigestible dietary components, improvements in dietary nutrient availability and digestion; enhancements in animal performance; and reduction of the environmental impact induced by nutrient excretion into the environment (Menezes-Blackburn and Greiner, 2015). In the aquaculture context, as terrestrial plant-based proteins (e.g., corn, corn gluten meal, rice bran, wheat bran, sunflower seed meal) become important components of aquafeeds to reduce its reliance on the traditional and non-sustainable source of protein-fish meal(FM), the supplementation these eco-friendly aquafeeds with feed enzymes will be essential to ensure the sustainable growth of this sector (Hua et al., 2019; Boyd et al., 2020). Plant ingredients have a high content of anti-nutritional compounds (ANFs), such as non-starch polysaccharides (NSPs) (e.g., cellulose, lignin, hemicellulose), which negatively impacts fish nutrient digestion, absorption, and utilization (Kokou and Fountoulaki, 2018). Since carnivorous fish lack the intestinal enzymes for NSP digestion as well as a non-well-developed microbiota in the digestive tract, the supplementation of NSP-degrading enzymes (such as *β-*glucanases and *β*-xylanases) in the diet will be the effective mean to improve nutrient utilization of plant-based diets and minimize its potential negative impacts on fish (Sinha et al., 2011; Castillo and Gatlin, 2015). Studies investigating the potential use of carbohydrases in aquafeeds are increasing (Castillo and Gatlin, 2015; Zheng et al., 2020). However, compared to terrestrial animal feeds, the commercial application of enzymes in aquaculture feeds is considerably lagged. As a way to widely embrace enzyme use in aquaculture, constraints regarding the practical efficiency of enzyme applications in aquafeeds have yet to be fully resolved, especially concerning enzyme stability during feed processing conditions, enzyme functionality/ modes of action under different fish gastrointestinal conditions, and effectiveness of enzyme application using post-pelleting methods (Castillo and Gatlin, 2015; Boyd et al., 2020). The efficacy of exogenous enzymes in aquafeeds may be adversely affected by the high processing temperatures applied during the feed manufacturing process and the fish rearing temperature (especially in cold water species with low body temperatures). Besides, part of the enzymes coated on the feed after thermal processing may be lost due to leaching in water. Fernandes et al., 2019 discloses the preparation of enzyme-rich extracts from BSG, using SSF with A. ibericus and its use in fish feed. D1 does not refer to the physiologic effects of using enzyme supplements, only providing in-vitro insights on nutrient bioavailability changes observed, and does not mention the hydrolytic effect of pre-treating plant feedstuff-based diets with enzyme-rich extracts.

### Summary

The invention is defined in the appended set of claims.

The present application discloses a pre-treatment process of plant feedstuff-based (PF) diets using said enzyme-rich extract in order to increase the nutrient bioavailability of animal diets.

It is provided a pre-treatment process of plant feedstuff-based (PF) diets comprising the following steps:
- Preparing a PF-based mixture, wherein the PF-based mixture comprises at least one of wheat gluten meal, soybean meal, rice bran meal, sunflower meal, rapeseed meals, and wheat meal;
- Dissolving the lyophilized enzyme-rich extract defined above in a reaction buffer at a pH between 3.6 and 5.1, wherein the reaction buffer is selected from sodium citrate, citrate-phosphate, and acetic-acetate, wherein the lyophilized enzyme-rich extract is dissolved in a concentration of 0.008-0.01 g of extract per mL of reaction buffer;
   and wherein the lyophilized enzyme-rich extract is produced according to the following steps:
   - Sterilizing Brewer's Spent Grain;
   - Adjusting the water content of the Brewer's Spent Grain substrate to 60-80%(w/v) with water;
   - Inoculating the Brewer's Spent Grain substrate with *Aspergillus ibericus* spores with a concentration of 2x10⁵ spores/g and incubate at 25 to 30 °C for 4 to 6 days, such that a solid residue is obtained;
   - Washing and filtering the solid residue with water, such that an aqueous extract is obtained;
   - Lyophilizing the aqueous extract;
- Adding the solution obtained in the previous step to the PF-based mixture in the quantity needed, so the final mixture has a moisture level between 40% and 75%;
- Maintain the mixture at 45 °C to 60 °C for 4 to 6 hours;
- Stopping the enzymatic hydrolysis.

In one embodiment, enzymatic hydrolysis is preferably stopped by placing the mixture at -20 °C. However, other options are possible, such as by denaturating the enzymes by heat (100 °C) or through the addition of chemical agents.

### Detailed Description

The present patent application discloses a pre-treatment process of plant feedstuff-based (PF) diets in order to increase the nutrient bioavailability of the said diets, thus increasing their nutritional value.

It is, therefore, the aim of the presently disclosed invention to provide enzyme-rich extracts obtained through SSF of BSG by-product as feed additives in animal diets. A preferable and additional aim is to provide the most efficient delivery approach of this enzyme-rich extract in aquafeeds (adding exogenous enzyme-rich extracts in the mixer before feed pelleting or pre-treating PF with exogenous enzyme-rich extracts) to promote fish growth, digestive function, and feed utilization.

According to the presently disclosed invention, it is disclosed a pre-treatment process of plant feedstuff-based (PF) diets comprising the following steps:
- Preparation of a PF-based mixture, wherein the PF-based mixture comprises at least one of wheat gluten meal, soybean meal, rice bran meal, sunflower meal, rapeseed meals, and wheat meal;
- Dissolve the lyophilized enzyme-rich extract defined above in a reaction buffer at a pH between 3.6 and 5.1, wherein the reaction buffer is selected from sodium citrate, citrate-phosphate, and acetic-acetate, wherein the lyophilized enzyme-rich extract is dissolved in a concentration of 0.008-0.01 g of extract per mL of reaction buffer;
   and wherein the lyophilized enzyme-rich extract is produced according to the following steps:
   - Sterilizing Brewer's Spent Grain;
   - Adjusting the water content of the Brewer's Spent Grain substrate to 60-80%(w/v) with water;
   - Inoculating the Brewer's Spent Grain substrate with *Aspergillus ibericus* spores with a concentration of 2x10⁵ spores/g and incubate at 25 to 30 °C for 4 to 6 days, such that a solid residue is obtained;
   - Washing and filtering the solid residue with water, such that an aqueous extract is obtained;
   - Lyophilizing the aqueous extract;
- Add the solution obtained in the previous step to the PF-based mixture in the quantity needed, so the final mixture has a moisture level between 40% and 75%;
- Maintain the mixture at 45 °C to 60 °C for 4 to 6 hours;
- Stop the enzymatic hydrolysis.

Enzymatic hydrolysis is preferably stopped by placing the mixture at -20 °C. However, other options are possible, such as by denaturating the enzymes by heat (100 °C) or through the addition of chemical agents.

Upon dissolving the lyophilized enzyme-rich extract in the reaction buffer, the resulting solution will preferably have a concentration of 10 to 20 U of cellulase per ml of buffer such that each gram of plant-feedstuff mixture is pre-treated with 4 to 8 U of cellulase.

### 1. Materials and methods

### 1.1 Solid-state fermentation of brewer's spent grain and enzyme-rich extract production

The enzyme-rich extract was obtained from SSF of BSG using *Aspergillus ibericus* from Micoteca of Universidade do Minho (MUM; reference: 03.49).

The fermentation was carried out using dried and sterilized BSG at 121 °C for 15 minutes. Subsequently, the moisture was adjusted with sterile distilled water at 75% and each tray was inoculated with a suspension of *Aspergillus ibericus* spores with a concentration of 2x10⁵ spores/ g BSG. Then, the trays were incubated at 25 °C for 7 days for fungi to grow and, at the end of the fermentation period, the enzymes produced were extracted. For that, 5 ml of distilled water were added for each gram of the fermented product, the mixture was continuously stirred for 30 min, at room temperature (20 °C ± 2 °C).

The solid residue is then filtered through a fine-mesh net and centrifuged at 7000 g for 10 minutes at 4 °C. The resulting enzyme-rich extract was lyophilized at -51 °C ± 1 °C and at a vacuum pressure between 4.0 Pa and 6.67 Pa until complete lyophilization. The lyophilized enzyme-rich extract was stored in darkness at 4 °C until its characterization and inclusion during feed production. The enzymatic activities of the lyophilized enzyme-rich extract were determined to define the levels of inclusion of the lyophilized enzyme-rich extract in the diets. The enzyme-rich extract has a combination of cellulase (1260.8 ± 237.8 U g⁻¹ enzyme-rich extract), xylanase (12100.8 ± 3785.9 U g⁻¹ enzyme-rich extract), β-glucosidase (11.24 ± 0.07 U g⁻¹ enzyme-rich extract), phytase (52.2 ± 0.04 U g⁻¹ enzyme-rich extract) and protease (346.7 ± 16.1 U g⁻¹ enzyme-rich extract).

### 1.2 Application of the lyophilized enzyme-rich extract in the diets and assessment of its functionality after feed manufacture

Six diets were formulated to be isoproteic (48% crude protein) and isolipidic (16% crude lipids), containing 15% of fishery products and fish oil as the main lipid source. Lyophilized enzyme-rich extract was included in the control diet at the levels 0, 0.1, 0.2, and 0.4% of dry matter (control, BSG0.1, BSG0.2, and BSG0.4 diets, respectively), corresponding to a cellulase supplementation of 0, 1000, 2000, and 4000 U g⁻¹ of diet (DM basis). A commercial enzymatic complex, *Natugrain*^{®}TS-Feed Enzyme, BASF (highly purified *endo-*4-β-xylanase and *endo*-4-β-glucanase)was also incorporated in the control diet at the level 0.04% of dry matter (NAT diet), corresponding to 4000 U cellulase g⁻¹ of diet (DM basis). All dietary ingredients were weighted, finely ground, well mixed and dry pelleted in a laboratory pellet mill (California Pellet Mill, Crawfordsville, IN, USA) through a 3 mm die. Pellets were dried in an oven for 24 h at 60 °C. The BSG composition, the enzymatic activity of the lyophilized enzyme-rich extract and in diets after manufacture experimental diets are presented in **Table 1.** The activity of the lyophilized enzyme-rich extract was not negatively affected by the feed manufacture process. The lyophilized enzyme-rich extract presented higher activities than the commercial enzymatic complex, *Natugrain*^{®}TS-Feed Enzyme, BASF.

The lyophilized enzyme-rich extract had 12101±3786, 1261±238; 11.3±0.1; 52.2±0.04; 347±16 U g⁻¹ lyophilized enzyme-rich extract of xylanase, cellulase, β-glucosidase, phytase, and protease activities, respectively. The enzymatic activity of the experimental diets supplemented with this extract ranged from 270-6090; 310-9310; 430-820, 281-1050, and 92-1740 U kg⁻¹ diet of cellulase, xylanase, β-glucosidase, phytase, and protease, respectively. The diet supplemented with the commercial enzymatic complex (NAT diet) had 1220, 4590, 710, and 1036 U kg⁻¹ diet of these enzymes' activities, respectively, with no protease activity.

**Table 1: Brewer's spent grain (BSG) composition and enzymatic activity (U g⁻¹ lyophilized extract) of lyophilized extract obtained after solid-state fermentation of BSG with Aspergillus ibericus (enzyme-rich extract) and of the experimental diets (U kg⁻¹ diet).**

| ***BSG composition (%)*** | | **Moisture** | **Reducing sugars (mg g⁻¹)** | **Protein** | **Cellulose** | **Hemicell ulose** | **Lignin** |
|---|---|---|---|---|---|---|---|
| | | 4.3 | 6.7 | 25.8 | 21.2 | 23.8 | 15.0 |

| **Enzymatic activity** | | **Cellulase** | **Xylanase** | **β-glucosidase** | | **Phytase** | **Protease** |
|---|---|---|---|---|---|---|---|
| ***Enzyme-rich* extract *(U g⁻¹ lyophilized* enzyme-extract)** | | 1261 | 12101 | 11.2 | | 52.2 | 347 |

| ***Experimental* diets (U kg⁻¹ diet)** | | | | | | | |
|---|---|---|---|---|---|---|---|
| | Control | 270 | 310 | 430 | | 281 | 92 |
| | BSG0.1 | 1110 | 1590 | 330 | | 717 | 1825 |
| | BSG0.2 | 1910 | 5540 | 510 | | 652 | 1679 |
| | BSG0.4 | 6090 | 9310 | 700 | | 1050 | 1686 |
| | NAT | 1220 | 4590 | 710 | | 1036 | - |

### 1.3 Application of the lyophilized enzyme-rich extract in the diets for in vivo assessment of its efficacy

A control diet (Control: 48% crude protein, 18 % crude lipids) was formulated to be challenging, with 25% fishery products (fish meal and fish protein concentrate), 3% hemoglobin, and 55.4% PF (wheat gluten, soy protein concentrate, sunflower, rice bran, rapeseed meal, whole-wheat) . Dietary lipids were mainly provided by fish oil (FO). Two other diets were prepared like the control but included increasing enzyme-rich extract levels to ensure 4000 (0.4%; BSG4 diet) and 8000 (0.8%; BSG8 diet) U of cellulase kg⁻¹ of diet. The other two diets (PreBSG4; PreBSG8) were formulated as the control diet but with the PF pre-treated with the equivalent amounts of enzyme activities of the lyophilized enzyme-rich extract used in both BSG4 and BSG8 diets. The value of 4000 U cellulase kg⁻¹ of diet was chosen for the lower level. To carry out the pre-treatment, the lyophilized enzyme-rich extract was diluted in sodium citrate buffer (pH 4.8, 0.1 M) and added to the PF mixture to obtain a mass with approximately 40% moisture. The enzymes were allowed to act by keeping the mixture at 45 °C for 4 h, with manual stirring every hour to ensure the homogeneity of the reaction. After this time, the reaction was stopped by placing the mixture in a cold chamber at -20 °C until the addition of the rest of the diet ingredients and preparation of feed pellets. Ingredients and proximate composition of the diets are presented in **Table 2.** All dietary ingredients were weighted, finely ground, well mixed and dry pelleted in a laboratory pellet mill (California Pellet Mill, Crawfordsville, IN, USA) through a 3 mm die. Pellets were dried in an oven for 24 h at 60 °C and stored at -20 °C temperature in plastic bags until used. The chemical composition and enzymatic activity of these experimental diets were determined.

**Table 2. Composition and proximate analysis of the experimental diets.**

| **Diet Ingredients (%)** | | **Control** | **BSG4** | **BSG8** | **PreBSG4** | **PreBSG8** |
|---|---|---|---|---|---|---|
| | Fish meal¹ | 20 | 20 | 20 | 20 | 20 |
| | CPSP² | 5 | 5 | 5 | 5 | 5 |
| | Wheat gluten³ | 12.1 | 12.1 | 12.1 | 12.1 | 12.1 |
| | Soy protein concentrate⁴ | 11.4 | 11.4 | 11.4 | 11.4 | 11.4 |
| | Sunflower⁵ | 8.5 | 8.5 | 8.5 | 8.5 | 8.5 |
| | Rice bran⁶ | 10 | 10 | 10 | 10 | 10 |
| | Rapeseed⁷ | 8 | 8 | 8 | 8 | 8 |
| | Whole-wheat⁸ | 5.4 | 5.4 | 5.4 | 5.4 | 5.4 |
| | Hemoglobin⁹ | 3 | 3 | 3 | 3 | 3 |
| | Hydrolyzed shrimp ¹⁰ | 1.2 | 1.2 | 1.2 | 1.2 | 1.2 |
| | Fish oil¹¹ | 11.2 | 11.2 | 11.2 | 11.2 | 11.2 |
| | Vitamin premix¹² | 1 | 1 | 1 | 1 | 1 |
| | Minerals¹³ | 1 | 1 | 1 | 1 | 1 |
| | Choline chloride (50%)¹⁴ | 0.5 | 0.5 | 0.5 | 0.5 | 0.5 |
| | Betaine | 0.2 | 0.2 | 0.2 | 0.2 | 0.2 |
| | Binder | 1 | 1 | 1 | 1 | 1 |
| | Taurine | 0.5 | 0.5 | 0.5 | 0.5 | 0.5 |
| | Lyophilized enzyme-rich extract (% diet) | | | | | |
| | | 0 | 0.34 | 0.68 | 0 | 0 |
| | Lyophilized enzyme-rich extract used for pre-treatment (% vegetable ingredients) | | | | | |
| | | 0 | 0 | 0 | 0.19 | 0.39 |

| **Proximate composition (% dry matter)** | | | | | | |
|---|---|---|---|---|---|---|
| | Dry matter (%) | 5.3 | 4.8 | 3.9 | 5.0 | 5.5 |
| | Crude protein | 50.5 | 49.2 | 48.8 | 45.8 | 46.0 |
| | Crude lipid | 17.2 | 17.0 | 17.9 | 19.7 | 18.5 |
| | Ash | 7.5 | 7.6 | 7.6 | 7.8 | 7.8 |
| | NFE¹⁵ | 24.9 | 26.3 | 25.7 | 26.6 | 27.7 |

| | | | | | | |
|---|---|---|---|---|---|---|
| ¹Pesquera Centinela, Steam Dried LT, Chile (CP: 79.7; CL: 10,5). ² Soluble fish-protein concentrate (CP: 80.2%; CL: 15.40%). ³ Wheat gluten (CP: 80%; CL: 1.74%) ⁴ Soy protein concentrate (CP: 48.57%; CL: 2.52%) ⁵ Sunflower (CP: 40.4%; CL: 1.0%) ⁶ Rice bran (CP: 14.20%; CL: 13.20%) ⁷ Rapeseed (CP: 41.14%; CL: 5.80%) ⁸ Whole-wheat (CP: 12.23%; CL: 3.19%) ⁹ Hemoglobin powder AP310P; APC Europe S.A. ¹⁰ Hydrolyzed shrimp (CP: 69.8%; CL: 12.1%) ¹¹ Fish oil ¹² Vitamin premix (mg kg⁻¹ diet): retinol, 18000 (IU kg⁻¹ diet); calciferol, 2000 (IU kg⁻¹ diet); alpha tocopherol, 35; menadion sodium bis., 10; thiamin, 15; riboflavin, 25; Ca pantothenate, 50; nicotinic acid, 200; pyridoxine, 5; folic acid, 10; cyanocobalamin, 0.02; biotin, 1.5; ascorbyl monophosphate, 50; inositol, 400. ¹³ Minerals (mg kg⁻¹ diet): cobalt sulphate, 1.91; copper sulphate, 19.6; iron sulphate, 200; sodium fluoride, 2.21; potassium iodide, 0.78; magnesium oxide, 830; manganese oxide, 26; sodium selenite, 0.66; zinc oxide, 37.5; dicalcium phosphate, 8.02 (g kg⁻¹ diet); potassium chloride, 1.15 (g kg⁻¹ diet); sodium chloride, 0.4 (g kg⁻¹ diet). ¹⁴ Choline chloride (50%) ¹⁵ NFE (Nitrogen free extract) = 100 - (crude protein + crude lipid + ash). | | | | | | |

The enzyme extract was a combination of cellulase (1178 U g⁻¹ lyophilized extract) and xylanase (8317 U g⁻¹ lyophilized extract).

### 1.4 Growth trial

European sea bass juveniles (*Dicentrarchus labrax*) were provided by local commercial aquaculture. After transportation to the experimental facilities, fish were maintained in quarantine for one month and fed with a commercial diet suitable for European sea bass juveniles (AquaGold, Aquasoja; Sorgal, S.A., Portugal).

The growth trial was carried out at the CIIMAR - Interdisciplinary Centre of Marine and Environmental Research (Matosinhos, Portugal) in a thermo-regulated recirculation water system equipped with 15 fiberglass tanks of 100 L water capacity and supplied by a continuous flow of filtered seawater.

Groups of 18 European sea bass juveniles with an average initial body weight of 21.5 ± 1 g were established. The 5 diets were randomly distributed in triplicate, and fish were fed twice a day to visual satiety, 6 days a week. During the trial, water quality was monitored weekly under postprandial conditions: water temperature was maintained at 23 ± 1°C, salinity at 35 ± 1 g L⁻¹ nitrogenous compounds below 0.02 mg L⁻¹, dissolved oxygen above 7.5 mg L⁻¹, and photoperiod controlled to 12 h light and 12 h dark.

The trial lasted 66 days and, after this period, fish were bulk weighed following one day of feed deprivation to determine the growth parameters. Ten fish from the initial population and two fish from each tank were randomly sampled for whole-body composition analysis. Three fish from each tank (9 fish/diet) were randomly sampled to collect intestine samples for digestive enzyme activity analysis.

For the determination of hepatosomatic index (HSI) and visceral index (VI), two other fish per tank were randomly sampled to record the weights of whole fish, viscera, and liver. Intestine samples were frozen in liquid N₂ and then stored at -80 °C until enzymatic analysis. For whole-body composition analysis, fish were dried at 100 °C until constant weight and then finely ground, well mixed, and stored in a desiccator until use.

### 1.5 Physical-Chemical analysis

The chemical composition of the lyophilized enzyme-rich extract, ingredients, diets, and whole-body was analyzed following standard procedures by the Association of Official Analytical Chemists (AOAC International 2016) as follows: in brief, protein content was calculated from nitrogen analysis (N × 6.25) by the Kjeldahl method after acid digestion using a Kjeltec digestion and distillation unit (Tecator Systems, Höganäs, Sweden; models 1015 and 1026, respectively); lipid content was determined by petroleum ether extraction using a Soxtec HT System (Tecator, Höganäs, Sweden); dry matter (DM) after drying at 105 °C until constant weight; ash by incineration in a muffle furnace at 450°C for 16 h. Analysis of free reducing sugars content was performed in experimental diets. For this purpose, an extraction with distilled water using a solid:liquid ratio of 1:5 (w/v) was performed to determine glucose and xylose contents. The content of these two free reducing sugars was measured using 3,5-dinitrosalicylic acid (DNS).

### 1.5.1 Analysis of NSPase activities

The carbohydrases activity was determined both in the lyophilized enzyme-rich extract and diets. Xylanase (*endo-*4-β-xylanase) and cellulase (*endo*-4-β-glucanase) activities were determined by measuring the release of reducing sugars after enzyme-rich hydrolysis using the DNS method. For *endo-*4-β-xylanase activity, beechwood xylan (1% (w/v) in sodium citrate buffer 0.05 N at a pH of 4.8) was used as a substrate. The sample and the substrate were placed at 50 °C for 15 minutes. Then, 3,5-dinitrosalicylic acid (DNS) was added and incubated at 100 °C for 5 minutes. After being cooled, distilled water was added, and the absorbance was read at 540 nm. Similarly, for *endo*-4-β-glucanase activity determination, carboxymethylcellulose (CMC 2% (w/v) in sodium citrate buffer 0.05 N at pH of 4.8) was used as a substrate, following the same procedure of xylanase determination, except the incubation at 50 °C lasted 30 minutes. Calibration curves were made using concentrations between 0 g L⁻¹ of glucose or xylose up to 2 g L⁻¹ of glucose or xylose, for cellulase and xylanase, respectively, both in sodium citrate buffer 0.05 N at pH 4.8. An International Unit (IU) of enzymatic activity was defined as the amount of enzyme needed to release 1 µmol of glucose per minute under standard assay conditions for cellulase assays; and 1 µmol of xylose per minute for xylanase assay. Results were expressed in units per gram of dry substrate (U g⁻¹).

The β-glucosidase activity of the experimental diets was determined using 5 mM 4-nitrophenyl-b-D-glucopyranoside (pPNG) as a substrate in an acetate buffer (50 mM, pH 5.0. following the method described by Leite *et al.* (2016), the reaction was assessed at 50 °C for 30 minutes, and the released p-nitrophenol was measured at 405nm. The activity was defined as the quantity of enzyme required to release 1 µmol of p-nitrophenol per minute under the assay conditions. Phytase activity was determined following the method described by Shivanna & Venkateswaran (2015), using sodium phytate in acetate buffer (0.2 M, pH 4.5) as substrate, and the activity was defined as the enzyme needed to liberate 1 µM of inorganic phosphate from the substrate under the assay conditions.

The protease activity was measured using azo-casein (0.5% w/v) in sodium acetate buffer (50 mM, pH 5) as substrate, and the activity was defined as the amount of enzyme able to produce an 0.01 absorbance increase compared to the blank.

### 1.5.2 Digestive enzymes activities

The activity of key digestive enzymes was assessed in the intestine. Intestinal samples were homogenized (1:4 w/v) in ice-cold buffer (100 mM Tris-HCl, 0.1 mM EDTA and 0.1% (v/v) TritonX⁻¹00, pH 7.8). Homogenates were centrifuged at 30 000 × g for 30 min at 4 °C, and the resultant supernatants were aliquoted and stored at -80 °C until analysis. All enzyme activities were measured at 37 °C in a Multiskan GO microplate reader (model 5111 9200; Thermo Scientific, Nanjing, China). The optimal substrate and protein concentrations for measuring each enzyme activity were established by preliminary assays. Assay conditions were as follows: α- Amylase (EC 3.2.1.1) was determined using a commercial kit (ref. 41201, Spinreact, Girona, Spain) with the alteration in sample and assay buffer proportions: used were 10 µL and 200 µL, respectively. Enzymatic activity was quantified by following the rate of 2-chloro-4-nitrophenol (molar extinction coefficient, 12.9 mM⁻¹cm⁻¹) formation at 405 nm. Lipase (EC 3.1.1.3) activity was determined using a commercial kit (ref. 1001274 Spinreact, Girona, Spain), with modification in the proportion of supernatants and assay reactives (200 µL of the assay buffer, 40 µL substrate with 10 µL of supernatants). The rate of methylresorufin (molar extinction coefficient, 60.6 mM⁻¹cm⁻¹) formation was quantified photometrically at 580 nm. Total alkaline protease activity (TAP) was measured by the casein-hydrolysis method. The reaction mixture consisted of 125 µL casein at 1% (w/v), 125 µL buffer (0.1 M Tris HCl, pH 9.0), and 50 µL sample, and was incubated for 1 h at 37 °C. The reaction was stopped by adding 0.3 mL trichloroacetic acid (TCA; 8% w/v) solution. After being kept for 1 h at 4 °C, samples were centrifuged at 1800 g for 10 min. The supernatant absorbance was read at 280 nm against blanks. Blank was prepared by adding the homogenate after incubation and immediately before TCA addition. L-tyrosine was utilized as standard.

Unit (U) of enzyme activity was defined as the enzyme amount that catalyzed the hydrolysis of 1 µmol of substrate per min at assay temperature. All enzyme activities were expressed per mg of soluble protein (specific activity). Protein concentration was determined according to the methodology of Bradford (1976) using a Biorad (Algés, Portugal) protein assay kit (ref. 5000006) with bovine serum albumin as standard.

### 1.6 Statistical analysis

Results are shown as mean and SEM. All data were checked for normality and homogeneity of variances and normalized when appropriate. Data were analyzed by a 2 × 2 factorial arrangement of treatments in a completely randomized experimental design (two-way ANOVA) with lyophilized enzyme-rich extract levels (0.4% and 0.8%) and incorporation method (adding exogenous enzyme-rich extracts in the mixer prior to feed pelleting (BSG), or pretreating plant ingredients with exogenous enzyme-rich extracts (PreBSG) as fixed factors. The significance level of 0.05 was used for the rejection of the null hypothesis. In cases where interaction was significant, one-way ANOVA was performed for each factor. Data from each of the dietary treatments (BSG4, BSG8, preBSG4, and preBSG8) was also analyzed against a reference diet (Control diet) using a one-way ANOVA followed by a Dunnett's multiple comparison test.

### 2. Results

### 2.1. Effects of pre-treatments in PF mixture

Following the hydrolysis of the PF mixture with the enzyme-rich extract, the sugars released throughout the process were quantified. Observing **Table 3,** it is possible to observe that the enzymatic pre-treatments resulted in high quantities of sugars released from the lignocellulosic matrix of the diverse PF as, by increasing the amount of extract from 4 U g⁻¹ up to 8 U g⁻¹, resulted in a two-fold increase of glucose, xylose, and arabinose. Additionally, xylose and arabinose were the sugars that were released in higher quantities, indicating more xylanase than cellulase activity in the enzyme-rich extract.

**Table 3. Glucose, xylose, and arabinose (mg g⁻¹ PF) release in plant-feedstuffs mixture during hydrolysis at 45 °C for 4 hours.**

| **Pre-treatments** | **Glucose** | **Xylose** | **Arabinose** | **Sugars release increase (%*)** | | |
|---|---|---|---|---|---|---|
| | | | | **Glucose** | **Xylose** | **Arabinose** |
| Control¹ | 18.2±0.9 | 9.6±0.4 | 0.9±0.03 | - | - | - |
| PreBSG4 | 25.3±1.0 | 14.1±0.4 | 3.4±0.1 | 38.9 | 47.3 | 282.1 |
| PreBSG8 | 32.9±3.5 | 17.2±1.9 | 6.5±1.0 | 80.5 | 79.7 | 628.7 |

| | | | | | | |
|---|---|---|---|---|---|---|
| ¹ PF mixed with the buffer, without enzymes, throughout 4h at 45 °C. *Percentage of sugars release in comparison with the control | | | | | | |

### 2.2 Characterization of experimental diets (carbohydrases activities and reducing sugars content)

The reducing sugars (glucose and xylose) content and carbohydrases activities of the experimental diets are presented in **Table 4.** Xylanase activity wasn't detected in the control diet or the PreBSG8 diet, and both cellulase and xylanase activities were higher in the BSG8 diet. The enzymatic pre-treatment substantially increased the available contents of reducing sugars in the diets (PreBSG4 and PreBSG8) compared to control or the non-pretreated diets (BSG4 and BSG8). Moreover, the starch content was similar between all diets except the PreBSG8 diet, in which the starch content decreased.

**Table 4. Reducing sugar composition/content, enzymatic activity, and starch content of the experimental diets.**

| **Diets** | **Cel (Ug⁻¹)** | **Xyl (Ug⁻¹)** | **Glucose (mg g⁻¹ diet)** | **Xylose (mg g⁻¹ diet)** | **Starch (%)** |
|---|---|---|---|---|---|
| Control | 0.1 | 0 | 2.7 | 2.2 | 9.4 |
| BSG4 | 5.0 | 6.6 | 3.8 | 3.0 | 10.2 |
| BSG8 | 6.6 | 39.0 | 3.8 9.0 | 3.0 | 9.3 |
| PreBSG4 | 3.4 | 5.4 | 7.1 | 7.1 | 9.5 |
| PreBSG8 | 5.2 | 0 | | 9.0 | 7.0 |

| | | | | | |
|---|---|---|---|---|---|
| Results are presented as the mean (n = 2); Xyl, xylanase; Cel, cellulase | | | | | |

### 2.3 Growth performance, feed utilization, whole-body composition, and digestive function

Data on growth performance and feed utilization of European sea bass fed with the experimental diets are presented in **Table 5.** All experimental diets were well accepted by the fish and, during the trial, mortality was very low and unaffected by dietary treatments. The different enzyme-rich extract levels and incorporation method did not affected initial body weight (IBW), final body weight (FBW), weight gain (WG), daily growth index (DGI), feed intake (FI), and feed efficiency (FE). In contrast, independent of the enzyme-rich extract levels, protein efficiency ratio (PER) was significantly affected by the incorporation method (p=0.015). The pre-treatment of PF with the extract significantly improved PER. Comparatively to a control diet, the fish fed enzymatic-pretreated diets (PreBSG4 and PreBSG8 diets) also presented higher PER as well as lower FI than that of the fish fed the control diet. However, FE was only higher in fish fed the PreBSG4 diet than in the control group. In addition, the BSG8 group exhibited higher WG and DGI than the control group. Nitrogen intake (NI) significantly decreased in the pre-treated diets (PreBSG4 and PreBSG8) compared with the control diet. Furthermore, a significant difference in NI was observed among the incorporation method treatments (p=0.012; two-way ANOVA). Fish fed pre-treated diets exhibited lower NI when compared to the BSG4 and BSG8 diets. Nitrogen retentions (g kg⁻¹ ABW per d and %NI)) and lipid intake (LI) and retentions (g kg⁻¹ ABW per d and %LI) were not significantly different from the control diet (one-way ANOVA, Dunnett's test). LI was lower in BSG4 than in BSG8 groups, whereas the opposite occurred for PreBSG4 and PreBSG8 groups. Within 0.4% enzyme extract-supplemented diets, LI was higher in the pretreated group than in the non-pretreated group. Fish fed the 0.8% enzyme-rich extract-supplemented diets exhibited lower LR (g kg⁻¹ ABW per d) in the diet without pre-treatment than when pre-treatment was applied.

**Table 5. Growth performance and feed efficiency of European sea bass fed the experimental diets (Mean values and standard error of the mean (SEM); n=3).**

| | **Control** | **BSG4** | **BSG8** | **PreBSG4** | **PreBSG8** | **SEM** |
|---|---|---|---|---|---|---|
| IBW (g) | 23.0 | 23.0 | 22.9 | 22.9 | 23.0 | 0.02 |
| FBW (g) | 61.7 | 61.6 | 62.8 | 63.3 | 60.8 | 0.61 |
| WG (g/kg⁻¹ ABW*^{‡}* day⁻¹) | 13.9 | 13.8 | 14.1* | 14.2 | 13.7 | 0.11 |
| DGI*^{†}* | 1.68 | 1.67 | 1.72* | 1.73 | 1.65 | 0.02 |
| FI (g/kg⁻¹ ABW^{≠} day⁻¹) | 19.9 | 18.2 | 18.9 | 17.6* | 18.0* | 0.28 |
| FE^{§} | 0.70 | 0.76 | 0.75 | 0.80* | 0.76 | 0.01 |
| PER^{\| \|} | 1.38 | 1.54 | 1.53 | 1.77* | 1.64* | |
| Mortality (%) | 0.0 | 0.0 | 1.9 | 0.0 | 0.0 | 0.04 0.37 |
| NI (g/kg⁻¹ ABW*^{‡}* d⁻¹) | 1.60 | 1.51 | 1.54 | 1.33* | 1.32* | 0.04 |
| N ret. (g/kg⁻¹ ABW*^{‡}* day⁻¹) | 0.42 | 0.40 | 0.41 | 0.41 | 0.40 | 0.01 |
| N ret. (%NI) | 26.1 | 26.7 | 27.0 | 30.43 | 30.4 | 0.74 |
| LI ( g/kg⁻¹ ABW*^{‡}* day⁻¹) | 3.41 | 3.09^{yA} | 3.52^{z} | 3.57^{zB} | 3.32^{y} | 0.05 |
| L ret.( g/kg⁻¹ ABW*^{‡}* day⁻¹)** | 2.64 | 2.47 | 2.86^{B} | 2.74 | 2.26^{A} | 0.08 |
| L ret. (%LI) | 77.6 | 80.2 | 81.3 | 76.8 | 68.0 | 2.49 |

| **2-Way ANOVA (p-value) ***** | | | | | | |
|---|---|---|---|---|---|---|
| **Factors** | | **BSG level** | | **IM** | **BSG level x IM** | |
| IBW | | 0.616 | | 0.773 | 0.521 | |
| FBW | | 0.934 | | 0.698 | 0.302 | |
| WG | | 0.998 | | 0.759 | 0.253 | |
| DGI | | 0.997 | | 0.766 | 0.251 | |
| FI | | 0.160 | | 0.328 | 0.696 | |
| FE | | 0.264 | | 0.351 | 0.592 | |
| PER | | 0.248 | | 0.015 | 0.338 | |
| Mortality | | 0.347 | | 0.347 | 0.347 | |
| NI | | 0.688 | | 0.002 | 0.656 | |
| N ret. (g/kg⁻¹ ABW*^{‡}* day⁻¹) | | 0.514 | | 0.674 | 0.674 | |
| N ret. (%NI) | | 0.900 | | 0.032 | 0.903 | |
| LI | | 0.174 | | 0.048 | 0.001 | |
| L ret. (g g/kg⁻¹ ABW*^{‡}* day⁻¹) | | 0.718 | | 0.273 | 0.021 | |
| L ret. (%LI) | | 0.476 | | 0.156 | 0.376 | |

| | | | | | | |
|---|---|---|---|---|---|---|
| **2-way-Anova (Fixed factors):** BSG levels (0.4% and 0.8%); IM: incorporation method (adding exogenous enzyme-rich extracts in the mixer prior to feed pelleting (BSG diets), or pretreating plant ingredients with exogenous enzyme-rich extracts (PreBSG diets)). *Denotes significant differences p < 0.05 between control diet and each test diet (BSG4; BSG8; PreBSG4; PreBSG8) (Dunnett test) ***Two-way ANOVA-excluding the control diet Significant differences at p < 0.05 ^{y,z,A,B} If interaction was significant, one-way ANOVA was performed for each factor, and means in the same line with different small or capital letters indicate significant differences (p < 0·05) between the two supplementation levels (0.4% or 0.8%) or incorporation method (IM: BSG vs. PreBSG), respectively; means with no letters are not significantly different (p ≥ 0·05). IBW, initial body weight; FBW, final body weight; ABW, average body weight; DGI, Daily growth index; FI, feed intake; FE, feed efficiency; PER, protein efficiency ratio. Nitrogen intake (NI); nitrogen retention (N ret.); Lipid intake (LI); lipid retention (L ret.). *†* DGI: ((FBW1/3 - IBW1/3)/time (d)) × 100. *‡* ABW: (IBW + FBW)/2. § FE: wet weight gain/dry feed intake. \| \| PER: wet weight gain/crude protein intake. ¶ N retention = ((FBW × carcass N content) - (IBW × carcass N content))/(ABW × the number of days). **Lipid retention = ((FBW × carcass lipid content) - (IBW × carcass lipid content))/(ABW × the number of days). | | | | | | |

Whole-body composition of the fish fed with the experimental diets is presented in **Table 6.** No significant effects of the lyophilized enzyme-rich extract levels and incorporation method were observed for HSI and whole-body protein and ash. Lipid and dry matter (DM) contents were affected by the IM treatment only in diets supplemented with enzyme extract at 0.8%. Lower lipids and DM were found in the whole-body of the PreBSG-group than on the BSG-group. Among pre-treated groups, higher VI was observed in fish fed PreBSG4 diet than PreBSG8 diet. Compared to the control group, whole-body protein, lipids, DM, ash contents, HSI, and VI were not different among the control diet and the other dietary treatments.

**Table 6. Whole-body composition (% wet weight), hepatosomatic index (HSI), and visceral index (VI) of European sea bass fed the experimental diets (Mean values and standard error of the mean (SEM); n=3).**

| | **Initial** | **Control** | **BSG4** | **BSG8** | **PreBSG4** | **PreBSG8** | **SEM** |
|---|---|---|---|---|---|---|---|
| DM | 24.9 | 34.8 | 33.7 | 35.2^{B} | 34.5 | 33.3^{A} | 0.51 |
| Lipid | 3.08 | 13.1 | 12.4 | 14.0^{B} | 13.4 | 11.4^{A} | 0.58 |
| Protein | 14.7 | 17.3 | 17.4 | 17.0 | 16.6 | 17.0 | 0.15 |
| Ash | 6.39 | 4.2 | 4.3 | 4.0 | 4.3 | 4.6 | 0.12 |
| HIS | ND | 1.5 | 1.3 | 1.7 | 1.5 | 1.5 | 0.08 |
| VI | ND | 10.6 | 10.3 | 10.7 | 12.1^{z} | 9.4^{y} | 0.34 |

| **2-Way ANOVA (p-value)***** | | | | | | | |
|---|---|---|---|---|---|---|---|
| **Factors** | **BSG level** | | **IM** | **BSG level x IM** | | | |
| DM | 0.787 | | 0.337 | 0.038 | | | |
| Lipid | 0.801 | | 0.284 | 0.043 | | | |
| Protein | 0.143 | | 0.143 | 0.172 | | | |
| Ash | 0.964 | | 0.164 | 0.135 | | | |
| HIS | 0.328 | | 0.989 | 0.349 | | | |
| VI | 0.131 | | 0.773 | 0.046 | | | |

| | | | | | | | |
|---|---|---|---|---|---|---|---|
| **2-way-Anova (Fixed factors):** BSG levels (0.4% and 0.8%); IM: incorporation method (adding exogenous enzyme-rich extracts in the mixer prior to feed pelleting (BSG diets), or pretreating plant ingredients with exogenous enzyme-rich extracts (PreBSG diets). ND: not determined. Means with no * are not significantly different (p ≥ 0·05) between the control diet and each test diet (BSG4; BSG8; PreBSG4; PreBSG8) (Dunnett test) ***Two-way ANOVA-excluding the control diet Significant differences at p < 0.05 ^{y,z,A,B} If interaction was significant, one-way ANOVA was performed for each factor, and means in the same line with different small or capital letters indicate significant differences (p < 0·05) between the two supplementation levels (0.4% or 0.8%) or incorporation method (IM: BSG vs. PreBSG), respectively; means with no letters are not significantly different (p ≥ 0·05). | | | | | | | |

The results of the intestinal digestive enzymes activities are presented in **Table 7.** Amylase and lipase activities were not significant affected by BSG level and incorporation method. On the other hand, total alkaline proteases from the 0.4% groups exhibited higher activities when fish were fed the diet with pre-treatment (PreBSG4 diet). In addition, total alkaline proteases, amylase, and lipase activities were not different among the control diet and the other dietary treatments (one-way ANOVA, Dunnett test).

**Table 7. Specific digestive enzyme activities (total alkaline proteases, amylase, and lipase) (mU mg⁻¹ protein) in the whole intestine of European sea bass fed the experimental diets (Mean values and standard error of the mean (SEM); n= 9).**

| **Diet** | **Control** | **BSG4** | **BSG8** | **PreBSG4** | **PreBSG8** | **SEM** |
|---|---|---|---|---|---|---|
| TAP | 81.4 | 52.5^{A} | 82.4 | 80.3^{B} | 67.2 | 4.33 |
| Amylase | 37.2 | 44.6 | 48.8 | 41.4 | 43.9 | 2.49 |
| Lipase | 4.11 | 4.69 | 5.14 | 3.36 | 4.91 | 0.27 |

| **2-Way ANOVA (p-value)***** | | | | | | |
|---|---|---|---|---|---|---|
| **Factors** | **BSG level** | | **IM** | **BSG level x IM** | | |
| TAP | 0.399 | | 0.524 | 0.035 | | |
| Amylase | 0.570 | | 0.493 | 0.884 | | |
| Lipase | 0.109 | | 0.211 | 0.371 | | |

| | | | | | | |
|---|---|---|---|---|---|---|
| **2-way-Anova (Fixed factors):** BSG levels (0.4% and 0.8%); IM: incorporation method (adding exogenous enzyme-rich extracts in the mixer prior to feed pelleting (BSG diets), or pretreating plant ingredients with exogenous enzyme-rich extracts (PreBSG diets). Total alkaline proteases (TAP) Means with no * are not significantly different (p≥0.05) between the control diet and each test diet (BSG4; BSG8; PreBSG4; PreBSG8) (Dunnett test). ***Two-way ANOVA-excluding the control diet Significant differences at p<0.05 ^{A,B} If interaction was significant, one-way ANOVA was performed for each factor, and means in the same line with different capital letters indicate significant differences (p<0.05) between the two tested incorporation methods(IM: BSG vs. PreBSG); means with no letters are not significantly different (p≥0.05). | | | | | | |

### 3. Discussion

Enzymes' production through SSF presents several advantages over submerged fermentation (SmF), including higher productivity and enzyme stability and lower risk of contamination and susceptibility of microorganisms to be inactivated by the substrate. Another important factor is the possibility of re-using agro-industrial by-products, such as BSG, to be used as physical support/substrate for enzyme production at low production costs, allowing SSF to be economically viable.

Although there is enormous potential to produce carbohydrases in a cost-effective and environmentally friendly way through SSF, this approach was little explored in the context of aquaculture. Preliminary results from the inventors revealed promising results in PF utilization by carnivorous species, as supplementation of a plant-based diet (61% PF) with an enzyme extract at 0.4%, with a combination of cellulase and xylanase obtained by SSF of BSG, improved the *in vivo* dry matter and energy digestibility of European seabass (apparent digestibility coefficients of dry matter and energy: control diet (67.7% and 78.3%, respectively) BSG 0.4% diet (72.8% and 83.4%, respectively). Moreover, using an *in vitro* digestibility approach, negative interactions between fish digestive enzymes (endoenzymes) and those present in the lyophilized enzyme-rich extract supplemented diets were observed on the hydrolysis of dietary carbohydrates. These results reinforce the importance of finding effective solutions to maximize exogenous enzyme efficacy in aquafeeds and overcome the potential adverse effects of the physico-chemical conditions of fish digestive tract (such as pH, temperature, enzymatic degradation by endogenous fish enzymes). The PF pre-treatments with the BSG enzyme extract at the optimal temperature and pH for enzyme activities can be an alternative approach to increase the action and efficacy of these enzymes, rather than add the enzymes directly to the mixer prior to pelleting or extrusion. Also, it can be an alternative to usually more expensive procedures, such as coating or top dressing these enzymes after pelleting or extrusion. In fact, xylanase has been shown to keep its optimum activity at temperature and pH values ranging, respectively, between 45 °C and 65 °C and 3.9 and 4.8. In parallel, cellulase has its optimum activity at 50 °C and pH 3.9. In this sense, the experimental work that leads to the present patent application aimed to establish: the more efficient incorporation method of the lyophilized enzyme-rich extract obtained by SSF of BSG in aquafeeds; and the optimum supplementation levels (0.4 and 0.8%) of the lyophilized enzyme-rich extract with the ultimate goal of observing the maximum benefits for European seabass fed a plant-based diet.

In fact, the results presented herein showed that pre-treatments with 4 U cellulase g⁻¹ and 8 U cellulase g⁻¹ of lyophilized enzyme-rich extract resulted in high quantities of sugars released from the lignocellulosic structure of PF. This indicates that the lyophilized enzyme-rich extract was highly efficient in disrupting the lignocellulosic structure of the diverse PF present in the mixture, enhancing its nutritional quality prior to its inclusion in European seabass feeds. Moreover, the release was highest using 8 U g⁻¹ of enzyme-rich extract, and pentoses (xylose + arabinose) were the most released sugars in both concentrations used. That occurred as the lyophilized enzyme-rich extract has higher xylanase activity (8317 U g⁻¹) than cellulase activity (1178 U g⁻¹), resulting in more released sugars from the hemicellulose fraction of PF. Additionally, hemicellulose is composed of branched heteropolysaccharides with lower polymerization degrees than cellulose, which is easier to hydrolyse than the latter. The high sugars yield showed the effective disruption of PF cell-walls during the pre-treatment, pointing out the suitability of the enzyme-rich extract in the NSPs reduction of the PF. Moreover, as the pre-treated PF aimed to be included in European seabass feeds, the lyophilized enzyme-rich extract allowed to obtain a nutritionally enhanced and more digestible PF mixture without the need to resort to more harmful pre-treatments, such as using high temperatures or hazardous chemicals, which often increase these processes costs.

Furthermore, the pre-treatment of PF with the enzyme-rich extract at 0.4% contributed to a better growth performance (weight gain and DGI) than fish fed the control diet, although results were not statistically different. The lack of significant effects was probably related to the internal variations among tanks of the PreBSG4 group, which made unfeasible the detection of statistical differences between the control and the PreBSG4 groups by the Dunnett test. The significant increase in FE of fish fed the preBSG4 diet compared to fish fed the control diet, as well as the higher PER in both pre-treated groups (PreBSG4 and PreBSG8 diets) compared to control and unpretreated groups, illustrate that the enzymatic pre-treatment of PF was effective in providing available energy that was probably used for growth rather than for energetic purposes/ making nutrients in PF more available to fish.

Although the dietary protein content of pre-treated diets was slightly lower than the other diets, increased FE was accompanied by a reduction in feed intake. From an economic perspective, the addition of the enzyme-rich extract can significantly reduce feeding costs, as aquafeeds account for 40-70% of variable production costs of aquaculture fish production. Also, the higher FE and PER observed in the enzyme-pre-treated groups concomitantly resulted in higher nitrogen retention (%N intake). The lack of detectable effects on whole-body protein and nitrogen retention among the enzyme pre-treated groups and the other groups was possibly due to the lower dietary protein content and nitrogen intake observed in the enzyme pre-treated groups.

The increase in fish digestive enzyme activities (TAP) in the PreBSG4 group suggests that pre-treatment of the PF with the lyophilized enzyme-rich extract also improved the protein utilization by increasing the access of endogenous digestive enzymes to the protein fraction. It is well established that NSP present in the cell-wall of PF form a matrix that hinders the access of endogenous digestive enzymes to the nutrients present in the PF. By hydrolyzing NSP, nutrients that otherwise would be hardly digested (the so-called "cage effect") become more available to endogenous digestive enzymes. Additionally, the NSP-induced digesta viscosity can be reduced, facilitating the release of entrapped nutrients. Despite the positive effect on TAP, no such effect was observed for lipase and amylase activities. It is known that dietary incorporation levels of enzymes can significantly limit the potential benefits of their supplementation on fish. Considering the previous positive effects of adding 0.4% of lyophilized enzyme-rich extract to a plant-based diet on nutrient digestibility of European seabass, the present patent application aimed to determine if an increase in the supplementation level would bring additional effects on zootechnical parameters. The results suggest that when the lyophilized enzyme-rich extract is directly added to the mixer prior to feed pelleting, a supplementation level of 0.8% is required, as an improvement in fish growth performance (WG and DGI) compared to the control diet was only observed at this level of supplementation in no pre-treated diets. On the other hand, the Lyophilized enzyme-rich extract pre-treatment of PF, by reducing the anti-nutritional effect and improving the nutritional values of PF, showed that the level of lyophilized enzyme-rich extract supplementation may be reduced to 0.4% to improve fish growth, protein, and feed utilization. In fact, supplementation of 0.8% lyophilized enzyme-rich extract in pre-treated diets contributed to the reduction of NSP content of PF and increased the availability of reducing sugars but, in fish, no further improvements or even an apparent adverse effect on growth performance and TAP activities (not statistically significant) were noticed. Although further studies are required to confirm this assumption, it is possible to hypothesize that the lack of beneficial effects on zootechnical parameters was partially attributable to an over-dosage of exogenous enzymes in the pre-treated diet.

### 4. Conclusion

It was herein demonstrated the potential application of exogenous enzyme-rich extracts produced by SSF of BSG, a cost-effective and eco-friendly biotechnological process, to be used - as feed additives in diets rich in PF for European seabass. The enzyme supplementation/incorporation method proved to influence nutrient availability in the diets and feed utilization by fish. Enzymatic pre-treatment of PF with this exogenous enzyme-rich extract seemed to be the more effective approach to increase the amount of available reducing sugars (xylose and glucose) in the diet and nutrient utilization of PF by European sea bass. The increase of dietary reducing sugars (xylose and glucose) availability, PER, FE, and TAP activities (mainly in PreBSG4) of European seabass through the PF pre-treatment with the lyophilized enzyme-rich extract confirms the highly effective hydrolysis of NSP by the carbohydrases present in the enzyme-rich extract. Moreover, the PF pre-treatment with the enzyme-rich extract also increased the protein accessibility to fish endogenous proteases and led to an overall improvement of protein and feed utilization, growth, and nitrogen retention.

The use of the lyophilized enzyme-rich extract as a pre-treatment method may also arise economic benefits as a lower quantity of lyophilized enzyme-rich extract was required to achieve good results compared to the conventional direct supplementation method of feed pelleting manufacture.

### Description of Embodiments

Now, preferred embodiments of the present application will be described in detail. However, they are not intended to limit the scope of this application.

It is provided a pre-treatment process of plant feedstuff-based (PF) diets comprising the following steps:
- Preparing a PF-based mixture, wherein the PF-based mixture comprises at least one of wheat gluten meal, soybean meal, rice bran meal, sunflower meal, rapeseed meals, and wheat meal;
- Dissolving the lyophilized enzyme-rich extract defined above in a reaction buffer at a pH between 3.6 and 5.1, wherein the reaction buffer is selected from sodium citrate, citrate-phosphate, and acetic-acetate, wherein the lyophilized enzyme-rich extract is dissolved in a concentration of 0.008-0.01 g of extract per mL of reaction buffer;
and wherein the lyophilized enzyme-rich extract is produced according to the following steps:
- Sterilizing Brewer's Spent Grain;
- Adjusting the water content of the Brewer's Spent Grain substrate to 60-80%(w/v) with water;
- Inoculating the Brewer's Spent Grain substrate with *Aspergillus ibericus* spores with a concentration of 2x10⁵ spores/g and incubate at 25 to 30 °C for 4 to 6 days, such that a solid residue is obtained;
- Washing and filtering the solid residue with water, such that an aqueous extract is obtained;
- Lyophilizing the aqueous extract;

- Adding the solution obtained in the previous step to the PF-based mixture in the quantity needed, so the final mixture has a moisture level between 40% and 75%;
- Maintain the mixture at 45 °C to 60 °C for 4 to 6 hours;
- Stopping the enzymatic hydrolysis.

In one embodiment, enzymatic hydrolysis is preferably stopped by placing the mixture at -20 °C. However, other options are possible, such as by denaturating the enzymes by heat (100 °C) or through the addition of chemical agents.

## Claims

1. A pre-treatment process of plant feedstuff-based diets comprising the following steps:
- Preparing a plant feedstuff-based mixture, wherein the plant feedstuff-based mixture comprises at least one of wheat gluten meal, soybean meal, rice bran meal, sunflower meal, rapeseed meals, and wheat meal;
- Dissolving a lyophilized enzyme-rich extract in a reaction buffer at a pH between 3.6 and 5.1, wherein the reaction buffer is selected from sodium citrate, citrate-phosphate, and acetic-acetate, wherein the lyophilized enzyme-rich extract is dissolved in a concentration of 0.008-0.01 g of extract per mL of reaction buffer; and wherein the lyophilized enzyme-rich extract is produced according to the following steps:
- Sterilizing Brewer's Spent Grain;
- Adjusting the water content of the Brewer's Spent Grain substrate to 60-80%(w/v) with water;
- Inoculating the Brewer's Spent Grain substrate with *Aspergillus ibericus* spores with a concentration of 2x10⁵ spores/g and incubate at 25 to 30 °C for 4 to 6 days, such that a solid residue is obtained;
- Washing and filtering the solid residue with water, such that an aqueous extract is obtained;
- Lyophilizing the aqueous extract;
- Adding the solution obtained in the previous step to the plant feedstuff-based mixture in the quantity needed, so the final mixture has a moisture level between 40% and 75%;
- Maintaining the mixture at 45 °C to 60 °C for 4 to 6 hours;
- Stopping the enzymatic hydrolysis.

2. A pre-treatment process of plant feedstuff-based diets according to claim 1, wherein the enzymatic hydrolysis is stopped by placing the mixture at -20 °C.

3. A pre-treatment process of plant feedstuff-based diets according to claim any of the claims 1 to 2, wherein the sterilization of the Brewer's Spent Grain is done by autoclavation at 121 °C for 15 min.

4. A pre-treatment process of plant feedstuff-based diets according to any of the claims 1 to 3, wherein the enzyme-rich extract comprises 12101±3786, 1261±238; 11.3±0.1; 52.2±0.04; 347±16 U g⁻¹ enzyme-rich extract of xylanase, cellulase, β-glucosidase, phytase, and protease activity, respectively.

## Patentansprüche

1. Ein Vorbehandlungssverfahren für Futtermittel auf Pflanzenbasis, das folgende Schritte umfasst:
- Vorbereiten einer Futtermittelmischung auf Pflanzenbasis, wobei die Futtermittelmischung auf Pflanzenbasis mindestens eines der folgenden Zutaten umfasst: Weizenglutenmehl, Sojaschrot, Reiskleie, Sonnenblumenschrot, Rapsschrot und Weizenmehl;
- Auflösen eines lyophilisierten enzymreichen Extrakts in einem Reaktionspuffer mit einem pH-Wert zwischen 3,6 und 5,1, wobei der Reaktionspuffer aus Natriumcitrat, Citrat-Phosphat- und Essigsäure-Acetat ausgewählt ist, wobei der lyophilisierte enzymreiche Extrakt in einer Konzentration von 0,008-0,01 g des Extrakts pro mL des Reaktionspuffers aufgelöst wird; und wobei der lyophilisierte enzymreiche Extrakt gemäß den folgenden Schritten hergestellt wird:
- Sterilisieren des Biertrebers;
- Anpassen des Wassergehalts des Biertreber-Subtrats auf 60-80% (w/v) mit Wasser;
- Inokulieren des Biertreber-Subtrats mit Aspergillus-Ibericus-Sporen mit einer Konzentration von 2x10⁵ Sporen/g und Inkubieren bei 25 bis 30 °C für 4 bis 6 Tage, sodass ein fester Rückstand erhalten wird;
- Waschen und Filtern des festen Rückstands mit Wasser, sodass ein wässriger Extrakt erhalten wird;
- Lyophilisieren des wässrigen Extrakts;
- Hinzugeben der im vorhergehenden Schritt erhaltenen Lösung zur Futtermittelmischung auf Pflanzenbasis in der erforderlichen Menge, sodass die Endmischung einen Feuchtigkeitsgehalt von 40% und 75% aufweist;
- Halten der Mischung bei 45 °C bis 60 °C für 4 bis 6 Stunden;
- Stoppen der enzymatischen Hydrolyse.

2. Ein Vorbehandlungsverfahren für Futtermittel auf Pflanzenbasis nach Anspruch 1, wobei die enzymatische Hydrolyse durch Abkühlen der Mischung auf -20 °C gestoppt wird.

3. Ein Vorbehandlungsverfahren für Futtermittel auf Pflanzenbasis nach einem der Ansprüche 1 bis 2, wobei die Sterilisierung des Biertrebers durch Autoklavieren bei 121 °C für 15 Minuten erfolgt.

4. Ein Vorbehandlungsverfahren für Futtermittel auf Pflanzenbasis nach einem der Ansprüche 1 bis 3, wobei der enzymreiche Extrakt jeweils 12101±3786, 1261±238; 11,3±0,1; 52,2±0,04; 347±16 U g⁻¹ enzymreicher Extrakt mit Xylanase-, Cellulase-, β-Glucosidase-, Phytase- und Proteaseaktivität umfasst.

## Revendications

1. Procédé de prétraitement de régimes alimentaires à base d'aliments végétaux comprenant les étapes suivantes :
- la préparation d'un mélange à base d'aliments végétaux, dans lequel le mélange à base d'aliments végétaux comprend au moins de la farine de gluten de blé, de la farine de soja, de la farine de son de riz, de la farine de tournesol, des farines de colza et de la farine de blé ;
- la dissolution d'un extrait lyophilisé riche en enzymes dans un tampon de réaction à un pH compris entre 3,6 et 5,1, dans lequel le tampon de réaction est choisi parmi le citrate de sodium, le tampon citrate-phosphate et le tampon acétate-acétique, dans lequel l'extrait lyophilisé riche en enzymes est dissous à une concentration de 0,008 à 0,01 g d'extrait par ml de tampon de réaction ; et dans lequel l'extrait lyophilisé riche en enzymes est produit selon les étapes suivantes :
- la stérilisation de Drêches de Brasserie ;
- l'ajustement de la teneur en eau du substrat de Drêches de Brasserie à 60 à 80% (p/v) avec de l'eau ;
- l'inoculation du substrat de Drêches de Brasserie avec des spores *d'Aspergillus ibericus* à une concentration de 2x10⁵ spores/g et d'une incubation à 25 à 30°C pendant 4 à 6 jours, de manière à obtenir un résidu solide ;
- la lavage et la filtration du résidu solide avec de l'eau, de manière à obtenir un extrait aqueux ;
- la lyophilisation de l'extrait aqueux ;
- l'ajout de la solution obtenue à l'étape précédente au mélange à base d'aliments végétaux, en quantité suffisante pour que le mélange final ait un taux d'humidité compris entre 40% et 75% ;
- le maintien du mélange à une température de 45°C à 60°C pendant 4 à 6 heures ;
- l'arrêt de l'hydrolyse enzymatique.

2. Procédé de prétraitement de régimes alimentaires à base d'aliments végétaux selon la revendication 1, dans lequel l'hydrolyse enzymatique est arrêtée en plaçant le mélange à -20°C.

3. Procédé de prétraitement de régimes alimentaires à base d'aliments végétaux selon l'une quelconque des revendications 1 à 2, dans lequel la stérilisation de Drêches de Brasserie est effectuée par autoclavage à 121°C pendant 15 minutes.

4. Procédé de prétraitement de régimes alimentaires à base d'aliments végétaux selon l'une quelconque des revendications 1 à 3, dans lequel l'extrait riche en enzymes comprend respectivement 12101 ± 3786, 1261± 238, 11,3 ± 0,1, 52,2±0,04 et 347±16 U g⁻¹ d'extrait riche en enzymes d'activités xylanase, cellulase, β-glucosidase, phytase et protéase, respectivement.
